# EUROPÄISCHE PATENTANMELDUNG

(11) **EP 2 138 262 A1**
(43) Veröffentlichungstag der Anmeldung: **30.12.2009**
(21) Anmeldenummer: 09007473.3
(22) Anmeldetag: 05.06.2009
(51) Int. Cl.: B23K 33/00, B23K 9/035, B23K 37/053, E04H 7/06

(54) **Füge- und Schweißprofil**

(30) Priorität: 18.06.2008 DE 102008029059
(71) Anmelder: Zeppelin Silos & Systems GmbH, 88045 Friedrichshafen (DE)
(72) Erfinder: Baumgartner, Michael, 88074 Meckenbeuren (DE); Kieter, Josef, 88090 Immenstaad (DE); Frey, Daniel, 88271 Wilhelmsdorf-Niederweiler (DE); Waggershauser, Hermann, 88445 Friedrichshafen (DE); Lang, Georg, 88048 Friedrichshafen (DE); Belfiore, Martin, 88662 Überlingen (DE)
(74) Vertreter: Riebling, Peter

(57) **Zusammenfassung**

Die Erfindung betrifft Füge- und Schweißprofil (3, 22) zur Herstellung eines aus axial seriell hintereinander angeordneten zylinderringförmigen Behälterschüssen (2, 2') bestehenden Lagerbehälters (1), **dadurch gekennzeichnet, dass** das Füge- und Schweißprofil (3, 22) einen Zylinderring (14, 23) und einen sich daran anschließenden Konusring (15, 24) beinhaltet, wobei der Zylinderring (14, 23) jeweils auf dem Außenmantel eines von zwei benachbarten Behälterschüssen (2, 2') befestigt ist und sich derart axial zwischen den benachbarten Behälterschüssen (2, 2') erstreckt, dass eine radial nach innen weisende Ringnut (16, 40) im Zylinderring (14, 23) im Bereich von sich gegenüberliegender Stirnseiten (6, 6') der Enden (17, 18) der zwei benachbarten Behälterschüsse (2, 2'), diesen zugewandt, liegt und wobei der Konusring (15, 24) sich vom Behälterschuss (2) mit dem daran befestigten Zylinderring (14, 23) in Richtung des benachbarten Behälterschusses (2') von radial innen nach radial außen hin öffnet und der Konusring (15, 24) vollkommen auf der Seite des Behälterschusses (2') liegt, der dem Behälterschuss (2) mit dem daran befestigten Zylinderring (14, 23) gegenüberliegt. Des Weiteren betrifft die Erfindung ein Verfahren zum Aufbau eines aus axial seriell hintereinander angeordneten zylinderringförmigen Behälterschüssen (2, 2') bestehenden Lagerbehälters (1), unter Verwendung des Füge- und Schweißprofils (3, 22), **dadurch gekennzeichnet, dass** a) zunächst ein unterster Behälterschuss (2) auf dem Erdboden oder einem Montagering (9) aufgelegt wird, b) danach auf dem Außenmantel des Endes (17) des untersten Behälterschusses (2) das Füge- und Schweißprofil (3, 22) über eine Vielzahl von Heft-Schweißnaht-Punkten (8) oder aber über eine Klemmverbindung (25) ggfs. mit optionaler axialer Abstandsvorrichtung (31) angebracht wird, c) danach ein oberer Behälterschuss (2') von oben auf den untersten Behälterschuss (2) aufgesetzt wird, wobei der obere Behälterschuss (2') durch das Füge- und Schweißprofil (3) zum untersten Behälterschuss (2) lagezentriert bzw. koaxial ausgerichtet wird, d) danach die beiden Behälterschüsse (2, 2') mittels Schweißnaht (19) vom Innern des Lagerbehälters (1) her miteinander verschweißt werden, e) danach bei Füge- und Schweißprofil (3, 22) als Klemmverbindung (25) das Füge- und Schweißprofil (22) vom untersten Behälterschuss (2) abgenommen wird, f) schließlich die beiden miteinander verschweißten Behälterschusse (2, 2') über das Höhenniveau eines weiteren Behälterschusses hinaus hochgehoben werden, g) die Schritte a) bis e) bzw. f) solange wiederholt werden, bis die geplante Höhe des Lagerbehälters (1) erreicht ist. Aufgabe ist es, dass ein erleichtertes Zusammenfügen von übereinander anzuordnenden Behälterschüssen und eine homogene Schweißverbindung an den sich gegenüberliegenden Stirnflächen der Behälterschüsse gewährleistet sein soll.

## Beschreibung

Die Erfindung bezieht sich auf ein Füge- und Schweißprofil zum Aufbau eines Behälters, insbesondere eines Lagerbehälters zur Lagerung von Schüttgütern oder Flüssigkeiten, wobei der Lagerbehälter vorzugsweise ein schweißfähiges Material, wie zum Beispiel Edelstahl oder Aluminium aufweist, nach dem Oberbegriff des unabhängigen Vorrichtungsanspruches 1.

Des Weiteren bezieht sich die Erfindung auf ein Verfahren zum Aufbau eines Behälters, insbesondere eines Lagerbehälters zur Lagerung von Schüttgütern oder Flüssigkeiten unter Verwendung eines derartigen Füge- und Schweißprofils nach dem unabhängigen Verfahrensanspruch 14 oder 15.

Lagerbehälter zur Lagerung von Schüttgütern oder Flüssigkeiten, welche vorzugsweise ortsfest aufgestellt sind, wurden in zahlreichen unterschiedlichen Ausgestaltungen offenbart und haben sich in der Praxis bewährt.

So wird mit der auf den gleichen Anmelder zurück gehende Druckschrift DE-GM 90 13 021 U1 ein Lagerbehälter für Schüttgüter oder Flüssigkeiten offenbart, wobei der Behälter als doppelwandiger Druckbehälter ausgebildet ist und im unteren Bereich eine Auslassöffnung aufweist und in einem Traggerüst eingesetzt ist.

Jedoch sind derartige Behälter nicht ausschließlich doppelwandig ausgeführt, wobei die Aufstellung derartiger einwandiger Lagerbehälter vorzugsweise in einer vertikalen Lage ausgeführt wird, um das darin gelagerte Schüttgut bzw. die Flüssigkeit unter Ausnutzung der Schwerkraft entnehmen zu können.

Zusätzlich ist es möglich, eine Entnahme des Lagergutes mit Hilfe einer Pumpe oder durch Druckmittel herbeizuführen.

Vertikal aufgestellte Lagerbehälter für Schüttgüter oder Flüssigkeiten weisen vorzugsweise eine Behälterhöhe auf, welche im Allgemeinen ein Vielfaches von dem Lagerbehälterdurchmesser darstellt. Lagerbehälterhöhen von 30 Meter und mehr sind daher keine Seltenheit.

Aufgrund der relativ großen Behälterhöhe erweist sich die Herstellung eines derartigen Lagerbehälters oftmals als schwierig, da ein derartiger Lagerbehälter aufgrund seiner Abmessungen erst vor Ort aufgebaut werden kann, um Schwierigkeiten beim Transport eines derartigen Lagerbehälters zu vermeiden.

Zusätzlich ist aufgrund der Abmessungen des Lagerbehälters eine Herstellung in einzelnen Behältersegmenten (Zarge bzw. Behälterschüsse) vorgesehen, welche wiederum aus vorgerundeten plattenförmigen Einzelsegmenten bestehen und in einer firmenseitigen Vorfertigung hergestellt werden.

Beim dem vor Ort-Aufbau eines derartigen Lagerbehälters ist es bekannt, die vorgefertigten Ringsegmente in vertikaler und/oder horizontaler Lage übereinander bzw. nebeneinander anzuordnen und die stumpf aufeinanderliegenden Stirnflächen der einzelnen Ringsegmente durch eine je nach Blechstärke 1- oder 2-lagige Schweißnaht miteinander zu verschweißen.

Eine derartige Vorgehensweise zum Aufbau eines Lagerbehälters minimiert somit die teilweise enorm hohen Kosten für den Transport aufgrund notwendiger Transporthilfsmittel und Transportpersonals.

Nachteil dieser Vorgehensweise ist, dass bei dem vor Ort-Aufbau eines derartigen Lagerbehälters ein relativ hoher Personaleinsatz, wie zum Beispiel Transportpersonal, Gerüstbauer, Schweißpersonal und entsprechende Transportmittel zum Aufbau des Lagerbehälters notwendig ist, um das Zusammenfügen der Einzelsegmente (Zarge, Behälterschüsse) zu realisieren.

Darüber hinaus ist zur Herstellung einer Schweißverbindung der Einsatz von teilweise bis zu vier Schweißern erforderlich, um eine homogene Schweißverbindung zwischen den einzelnen Ringsegmenten herzustellen.

Des Weiteren ist für das Ausrichten der einzelnen Ringelemente zueinander ein zusätzlicher Heftvorgang erforderlich, welcher einen relativ hohen Zeit- und Personaleinsatz erfordert.

Aus diesem Grunde kann die Aufgabenstellung zur vorliegenden Erfindung darin gesehen werden, den Aufbau eines derartigen Lagerbehälters vor Ort derart weiterzubilden, dass ein zeitverminderter und kostengünstiger Aufbau eines derartigen Lagerbehälters vor Ort in einer einfachen Art und Weise gewährleistet ist.

Die Lösung der gestellten Aufgabe ist **dadurch gekennzeichnet, dass** der Behälterschuss (Zarge) mindestens ein auf seiner Mantelfläche befestigtes Füge-und Schweißprofil aufweist, welches ein erleichtertes Zusammenfügen von übereinander anzuordnenden Behälterschüssen gewährleistet und eine homogene Schweißverbindung an den sich gegenüberliegenden Stirnflächen der Behälterschüsse ausbildet.

Ein erster Vorteil bei der Verwendung eines derartigen Füge- und Schweißprofils ist ein geführtes Aufeinandersetzen von zwei miteinander zu verbindenden Behälterschüssen, wobei der aufzusetzende Behälterschuss aufgrund des an dem darunter liegenden Behälterschuss angeordneten Füge- und Schweißprofils radial umlaufend geführt ist. Hier spielt die Reihenfolge des Zusammenbaus keine Rolle - ob vom Dach zum Kegel (von oben nach unten) aufgestockt wird oder umgekehrt (von unten nach oben).

Ein weiterer Vorteil ist dadurch gegeben, dass die beiden aufeinanderzusetzenden Behälterschüsse nahezu keinen Kantenversatz nach dem Aufsetzvorgang aufweisen, da der aufgesetzte Behälterschuss aufgrund der radial umlaufenden Führung durch das Füge- und Schweißprofil einen Versatz der beiden Behälterschüsse lediglich mit einer relativ kleinen Toleranz ausbildet.

Zusätzlich weist das Füge- und Schweißprofil den Vorteil auf, dass ein Aufbringen von Heft-Schweißnähten vor dem auszuführenden Schweißvorgang nicht erforderlich ist, da ein Versatz der beiden Behälterschüsse zueinander nach dem Aufeinandersetzen durch die radial umlaufende Führung des Füge- und Schweißprofils vermieden wird.

Neben dem Heften & Schweißen ist auch ein reib-/kraftschlüssiges Klemmen bzw. eine mechanisch lösbare Anbringung des Füge- und Schweißprofils möglich. Der grundlegende Unterschied beim Klemmen ist, dass das Füge- und Schweißprofil lösbar mit dem Behälter verbunden wird und daher für andere Behälter wieder verwendbar ist. Der Einführtrichter des geklemmten Füge- und Schweißprofils ist gegenüber dem schweißgehefteten Füge- und Schweißprofil axial verlängert und wird mit der Schweißbadsicherung permanent verbunden. Beim schweißgehefteten Füge- und Schweißprofil wird der Trichter durch ein "aufspreizen" des Schweißprofils während des Heft- bzw. Schweißvorgangs erzielt.

Weiterhin ist durch die erfindungsgemäße Ausbildung des Profils als Schweißprofil bzw. Klemmprofil erstmalig eine einseitige Schweißverbindungsnaht erforderlich, da durch das auf der Mantelfläche angeordnete Schweißprofil eine homogene Schweißnaht ausgebildet wird.

Darüber hinaus wird aufgrund des nach Außen gewölbten Schweißprofils bzw. Klemmprofils eine Schweißbadsicherung ausgebildet, welche eine verbesserte Schweißqualität aufgrund einer kontinuierlichen Zuführung des Schutzgases gewährleistet, da das einseitige Verschweißen von zwei aufeinanderliegenden Behälterschüssen vorzugsweise im Innenraum des aufzubauenden Behälters ausgeführt wird.

Dies weist weiterhin den Vorteil auf, dass der Schweißvorgang in einem nahezu windgeschützten Raum ausgeführt wird, wobei das notwendige Schutzgas während des Schweißvorganges nicht durch Windeinwirkung aus dem Schweißbereich verdrängt wird.

Im Wesentlichen gibt es beim Klemmen des Füge- und Schweißprofils keine Änderungen in der Form der Scheißbadsicherung für die Schweißnahtwurzel im Vergleich zum heftgeschweißten Füge- und Schweißprofil. Die Schweißbadsicherung des geklemmten Füge- und Schweißprofils ist als permanente Nut in ein Grundmaterial eingearbeitet (z.B. gefräst).

Weiterhin ist es nicht erforderlich, dass beim Aufbau eines derartigen Behälters ein Gerüst für das Montagepersonal aufgebaut werden muss, da die zusammengeschweißten Behälterschüsse mit einem entsprechenden Transportkran auf einen jeweils darunter angeordneten weiteren Behälterschuss mit einem Füge- und Schweißprofil aufgesetzt werden.

Darüber hinaus weist der nach oben hin offene Behälter während des Schweißvorgangs eine Art "Kaminwirkung" auf, wodurch die auftretenden Schweiß- und Verbrennungsgase durch diese entsprechende Kaminwirkung nach oben hin selbsttätig abgeführt werden.

Entsprechend der von einer Seite ausgeführten Schweißverbindung ist ersichtlich, dass der Zeitaufwand für den eigentlichen Schweißvorgang deutlich reduziert wird, da das Zusammenschweißen der beiden Behälterschüsse durch teilweise vier Schweißfacharbeiter nicht mehr erforderlich ist.

Die einseitige Verschweißung der beiden Behälterschüsse ermöglicht den Einsatz eines Schweißroboters zur Ausführung einer Rundnaht durch einen einzelnen Schweißfacharbeiter. Das Füge- und Schweißprofil mit seiner integrierten Schweißbadsicherung wird im äußeren Randbereich des Behälterschusses auf der Manteloberfläche derart angeordnet, dass die integrierte Schweißbadsicherung in etwa mittig die Kantenlinie der zwei aufeinandergesetzten Behälterschüsse überdeckt.

Das Füge- und Schweißprofil ist vorzugsweise durch entsprechende Heft-Schweißnähte bzw. Klemmverbindung im Randbereich auf der Mantelfläche des Behälterschusses befestigt. Des Weiteren ist die Vorrichtung so ausgeführt, dass ein einseitiges oder beidseitiges Schweißen möglich ist.

Hierbei ist darauf hinzuweisen, dass aufgrund dieser Verbindungstechnik das Füge-und Schweißprofil bereits in der Vorfertigung eines derartigen Behälterschusses an das noch plan ausgebildete Mantelblech des Behälterschusses angeheftet wird und mit diesem zusammen im weitergehenden Walzvorgang zusammen rund ausgewalzt werden kann, oder bauseitig/montageseitig über eine Klemmverbindung angebracht sein kann.

Nach dem erfolgten Rundwalzen wird der Behälterschuss durch eine entsprechende Längsnaht an den beiden sich gegenüberliegenden Stirnflächen des Mantelbleches zusammengeschweißt.

Mit einem entsprechenden Hebewerkzeug wie z. B. einem Lastenkran wird der vorgefertigte Behälterschuss mit dem daran angeordneten Füge- und Schweißprofil auf einen weiteren, vorgefertigten Behälterschuss aufgesetzt, wobei das Füge- und Schweißprofil ein geführtes Aufsetzen eines Behälterschusses gewährleistet.

Nach dem Aufsetzen des Behälterschusses auf einen darunter liegenden Behälterschuss werden diese durch einen entsprechenden Schutzgasschweißvorgang an den sich gegenüberliegenden Stirnflächen miteinander verschweißt.

Nach dem Schweißvorgang werden die beiden nunmehr miteinander verschweißten Behälterschüsse durch eine entsprechende Hebevorrichtung angehoben und wiederum auf einen darunter angeordneten, mit einem Füge- und Schweißprofil ausgestatteten Behälterschuss aufgesetzt und anschließend mit diesem verschweißt.

Dieser Vorgang ist beliebig wiederholbar, bis die erwünschte Behälterhöhe mit dem entsprechenden Behältervolumen erreicht ist. Selbstverständlich ist es möglich, einen ersten Behälterschuss mit einem entsprechenden Behälterdach zu verschließen und diesen zusammen mit dem Behälterdach auf einen darunter liegenden weiteren Behälterschuss mit angeordnetem Füge- und Schweißprofil aufzusetzen.

Des Weiteren sei an dieser Stelle darauf hingewiesen, dass das angeordnete Füge-und Schweißprofil zusätzlich zur Aufnahme von Zubehörteilen wie z. B. Transporthaken oder Transportösen verwendbar ist, was ein zusätzliches Anbringen eines Futterbleches zur Aufnahme derartiger Zubehörteile auf der Mantelfläche des Behälters nicht erfordert, was aber nur für das angeschweißte Profil gilt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: das Aufsetzen eines Behälterschusses auf einen darunter angeordneten Behälterschuss mit einem auf seiner Mangelfläche angeordneten heftgeschweißten Füge- und Schweißprofil;
- Figur 2:: eine Detailansicht eines Behälterschusses mit angeordnetem heftgeschweißten Füge- und Schweißprofil nach Figur 1;
- Figur 3:: eine Detailansicht der Innenoberfläche eines einzelnen Behälterschusses;
- Figur 4:: die Hauptansicht eines heftgeschweißten Füge- und Schweißprofils im Stirnflächen-bereich zweier Behälterschüsse;
- Figur 5:: eine Detailansicht eines Behälterschusses mit angeordnetem geklemmten Füge- und Schweißprofil;
- Figur 6:: eine Detailansicht der axialen Führung des geklemmten Füge- und Schweißprofils nach Figur 5;
- Figur 7:: ein Querschnitt in axialer Vertikalrichtung durch das geklemmten Füge-und Schweißprofils im Stirnflächenbereich zweier Behälterschüsse nach Figuren 5 und 6.

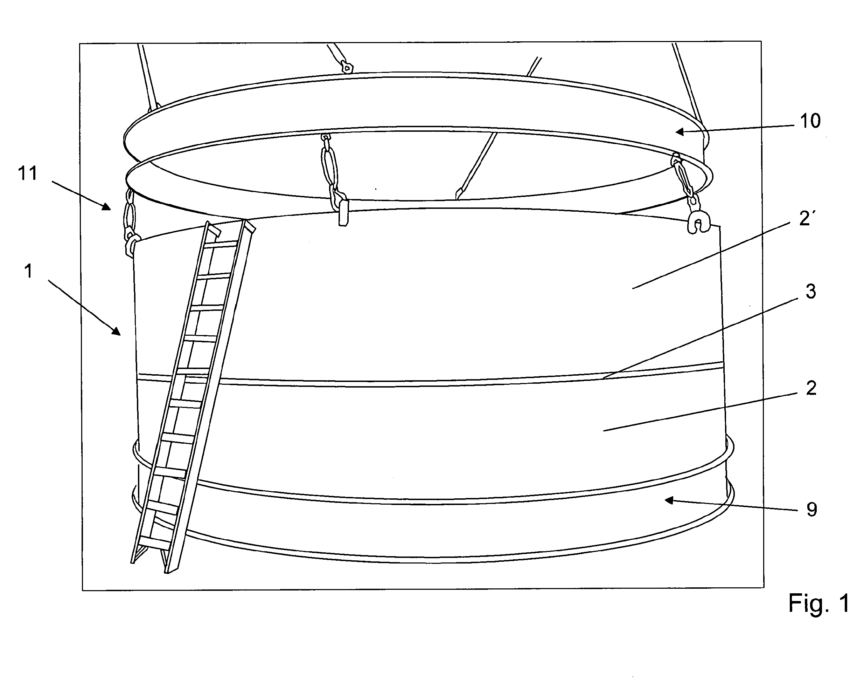

Figur 1 zeigt einen erfindungsgemäßen Lagerbehälter 1, welcher vor Ort durch Aufeinandersetzen von ringförmigen Behälterschüssen 2, 2' aufgebaut wird.

Hierbei ist ein erster, ringförmiger Behälterschuss 2 auf einem dem ringförmigen Behälterschuss 2 angepassten Montagering 9 derart aufgesetzt, dass die nach unten weisende Stirnfläche des Behälterschusses 2 auf der oberen Stirnfläche des Montagerings 9 aufliegt.

Der Behälterschuss 2 wird firmenseitig aus plattenförmig ausgebildeten Segmentblechen hergestellt, welche durch entsprechende Schweißnähte miteinander verbunden sind.

Auf mindestens einer der daraus entstehenden Längsseiten der aneinandergeschweißten Segmentbleche werden werksseitig entsprechend ausgebildete Füge- und Schweißprofilsegmente 3 durch entsprechende Heft-Schweißnähte im oberen Randbereich einer Längsseite des Segmentbleches befestigt.

Anschließend werden die zusammengeschweißten Segmentbleche mit den daran angeordneten Füge- und Schweißprofilsegmenten 3 entsprechend dem erwünschten Radius des fertig gestellten Lagerbehälters 1 rund ausgeformt, wobei anschließend die sich gegenüberstehenden Stirnflächen des sich ergebenden Behälterschusses 2, 2' durch eine entsprechende Quer- Schweißnaht 7 miteinander verbunden werden. Hierbei wird das angefügte Füge- und Schweißprofil 3 ebenfalls durch eine Quer-Schweißnaht 12 miteinander verbunden.

Anschließend wird ein zweiter, firmenseitig vorgefertigter Behälterschuss 2' mit einer entsprechenden Transport- bzw. Hilfskonstruktion 10 mittels entsprechender Befestigungselemente 11 in vertikaler Lage auf den bereits darunter vertikal angeordneten ersten Behälterschuss 2 aufgesetzt. Bei einer horizontalen Fertigung werden die Segmente horizontal aneinander gefügt.

Aufgrund des angeordneten Füge- bzw. Schweißprofils 3 bildet dieses eine radial umlaufende Führung für den darin einzusetzenden Behälterschuss 2' aus.

Nach dem Aufsetzten des Behälterschusses 2' auf den Behälterschuss 2 werden die sich in Gegenüberstellung liegenden Stirnflächen der beiden Behälterschüsse 2, 2' durch einen entsprechenden Schutzgasschweißvorgang (MIG / WIG) mittels eines dafür vorgesehenen Schweißroboters (nicht dargestellt) miteinander verbunden. Der Schweißvorgang wird lediglich von einer Seite des Behälters ausgeführt, vorzugsweise auf der inneren Manteloberfläche der aufeinandergesetzten Behälterschüsse 2, 2'.

Dieser vorbeschriebene Aufbauvorgang eines Lagerbehälters 1 ist beliebig wiederholbar, bis die erwünschte Lagerbehälterhöhe bzw. das erwünschte Raumvolumen des Lagerbehälters 1 durch Aufeinandersetzen und Verschweißen einzelner Behälterschüsse 2, 2' erreicht wird.

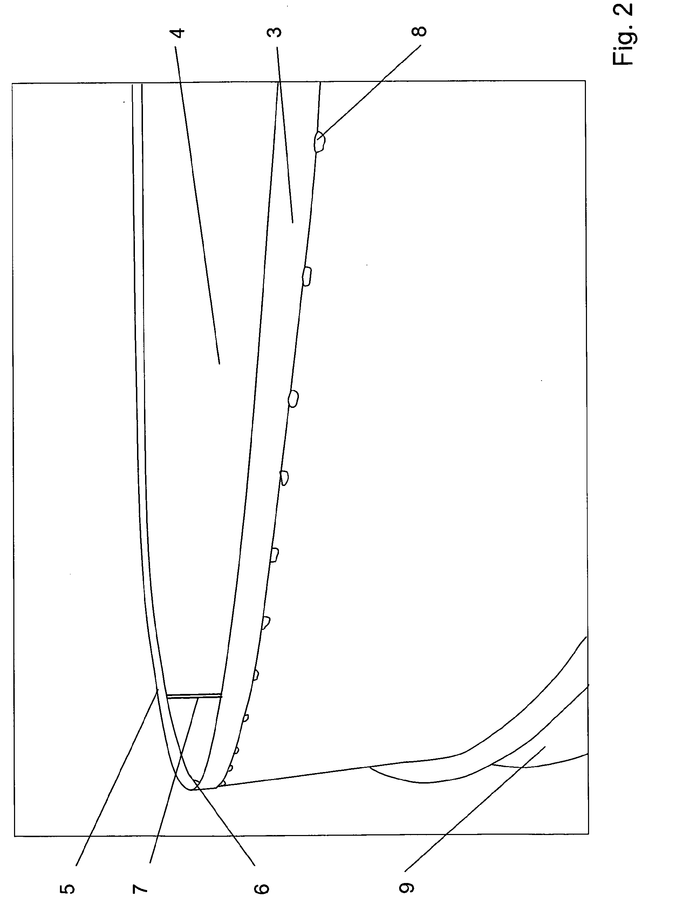

In Figur 2 ist ein erfindungsgemäßer Behälterschuss 2, 2' dargestellt, wobei der ringförmig ausgeformte Behälterschuss 2, 2' eine Quernaht 7 aufweist, welche die aus einzelnen Plattensegmenten zusammengefügten Behälterschüsse 2, 2' an ihren jeweiligen Stirnflächen miteinander verbindet.

An der axial nach oben gerichteten Stirnfläche 6 des Behälterschusses 2, 2' ist ein erfindungsgemäßes Füge- und Schweißprofil 3 mittels zueinander beabstandeten Heftschweißnähten 8 befestigt, wobei dieses Füge- und Schweißprofil 3 ebenfalls aus einzelnen Profilsegmenten mittels entsprechender Schweißverbindung zusammengefügt ist.

Jedes einzelne Schusssegment 4 ist durch die hier dargestellte Quernaht 7 verbunden und ist werksseitig durch einen entsprechenden Umformvorgang in einen ringförmigen Behälterschuss 2, 2' umgeformt.

Das Füge- und Schweißprofil weist vorzugsweise eine integrierte Schweißbadsicherung 16 auf (hier nicht dargestellt), welche nahezu mittig auf der umlaufenden Außenoberfläche des Behälterschusses 2, 2' im Bereich der gegenüberliegenden Stirnflächen der Behälterschüsse 2, 2' angeordnet ist.

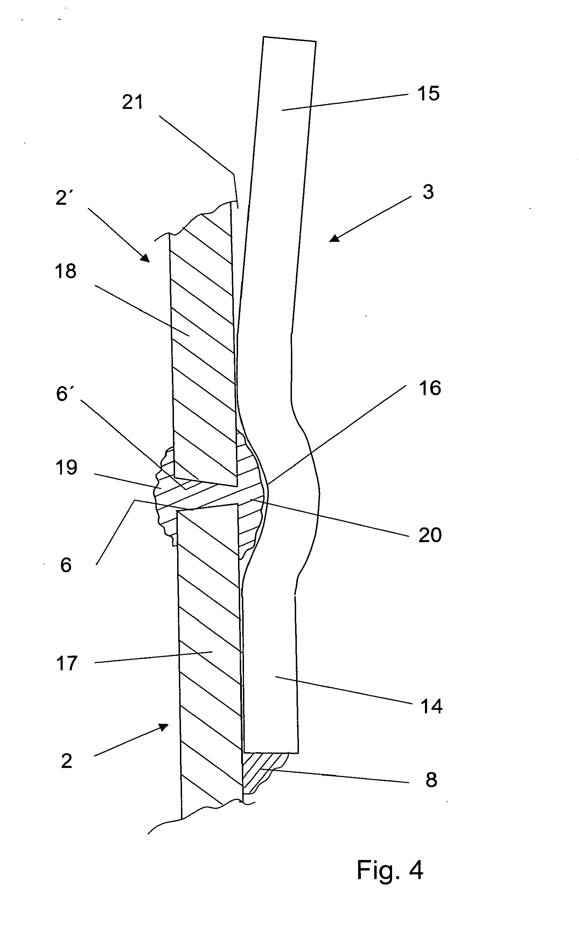

Diese Schweißbadsicherung, welche in Figur 4 näher beschrieben wird, dient zur Ausbildung einer homogenen Schweißnaht bei der Herstellung einer Längsnahtschweißverbindung zwischen den beiden aufeinander angeordneten Behälterschüssen 2, 2', wobei der Schweißvorgang auf der inneren Oberfläche des Behälterschusses 2, 2' ausgeführt wird.

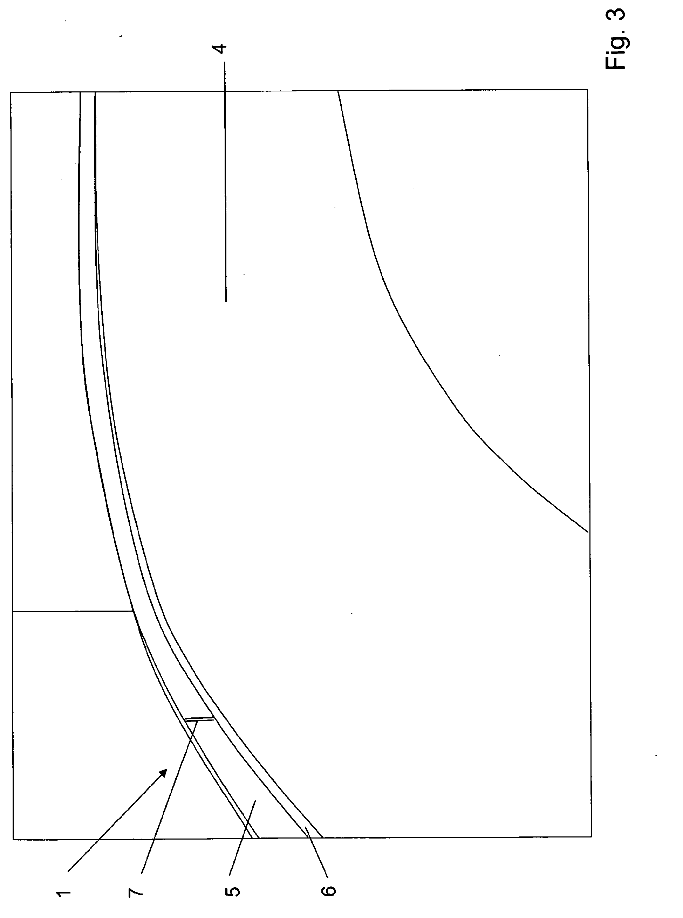

In Figur 3 wird eine detaillierte Innenansicht eines ringförmig ausgebildeten Behälterschusses 2, 2' dargestellt, wobei das Füge- und Schweißprofil 3 aus einzelnen Schweißprofilsegmenten 5 hergestellt ist, welche an ihren jeweiligen Stirnflächen durch eine entsprechende Quer-Schweißnaht miteinander verbunden sind.

Hier wird deutlich, dass das Füge- und Schweißprofil auf der äußeren Manteloberfläche des ringförmig ausgebildeten Behälterschusses 2, 2' mittels Heftschweißnähten 8 (hier nicht dargestellt) angeordnet ist, wobei die Stirnfläche des Behälterschusses 6 als Auflagefläche des darauf angeordneten weiteren Behälterschusses 2, 2' ausgebildet ist.

Die Anordnung des an der äußeren Manteloberfläche des Behälterschusses 2, 2' angeordneten Füge- und Schweißprofils 3 bildet somit eine Fügehilfe für den darüber anzuordnenden Behälterschuss 2, 2' aus, wobei beim Aufsetzen des oberen Behälterschusses 2, 2' das Füge- und Schweißprofil 3 eine radial umlaufende Zentrierung für den oberen Behälterschuss 2, 2' ausbildet.

Zusätzlich ist durch die Anordnung des Füge- und Schweißprofils 3 gewährleistet, dass ein nachträgliches Ausrichten eines aufgesetzten Behälterschusses 2, 2' nicht erforderlich ist.

Figur 4 zeigt ein erfindungsgemäßes Füge- und Schweißprofil 3, welches im axial unteren Bereich einen Profilschenkel 14 aufweist, der mit seiner daran anschließenden Stirnfläche mittels einer Heft-Schweißnaht 8 auf der radial nach außen gerichteten Oberfläche eines unteren Behälterschusses 17 mindestens teilweise angeschweißt ist.

Im Bereich der axialen oberen bzw. unteren Enden 17, 18 des unteren Behälterschusses 2 und des oberen Behälterschusses 2' weist das Füge- und Schweißprofil 3 eine radial nach außen gewölbte Schweißbadssicherung 16 auf, welche zur Ausbildung einer homogenen Schweißnahtwurzel 20 ausgebildet ist, wenn die beiden übereinander angeordneten Behälterschüsse 2 und 2' im Bereich ihrer zueinander gerichteten Stirnflächen 6 miteinander verschweißt werden.

Die verbindende Schweißnaht zwischen dem oberen und unteren Behälterschuss 2, 2' ist als Längsschweißnaht 19 ausgebildet, welche mittels einem Schweißroboter (hier nicht dargestellt) auf der Innenseite auf den ringförmig ausgebildeten Behälterschüssen 2, 2' ausgeführt wird.

Im axial nach oben gerichteten Bereich des Füge- Schweißprofils 3 weist dieses einen Profilschenkel 15 auf, welcher mit einem vorbestimmten ringförmigen Aufnahmeraum 21 radial nach außen zur Manteloberfläche des Behälterschusses 2, 2' versetzt ist.

Dieser ringförmige Aufnahmeraum 21 bildet die erfindungsgemäße Fügehilfe des Füge- und Schweißprofils 3 aus, wobei der obere Profilschenkel 15 mit seiner Innenoberfläche im unteren Bereich des oberen Profilschenkels zusätzlich eine radial umlaufende Zentrierung für den aufzusetzende oberen Behälterschuss 18 ausbildet.

Selbstverständlich ist die Anordnung von weiteren Zubehörteilen (hier nicht dargestellt) an der Außenoberfläche eines erfindungsgemäßen Füge- und Schweißprofils 3 möglich, wobei das Füge- und Schweißprofil 3 zusätzlich die Funktion eines Futterbleches zur Befestigung von zusätzlichen Zubehörteilen an einem Lagerbehälter 1 ausbildet.

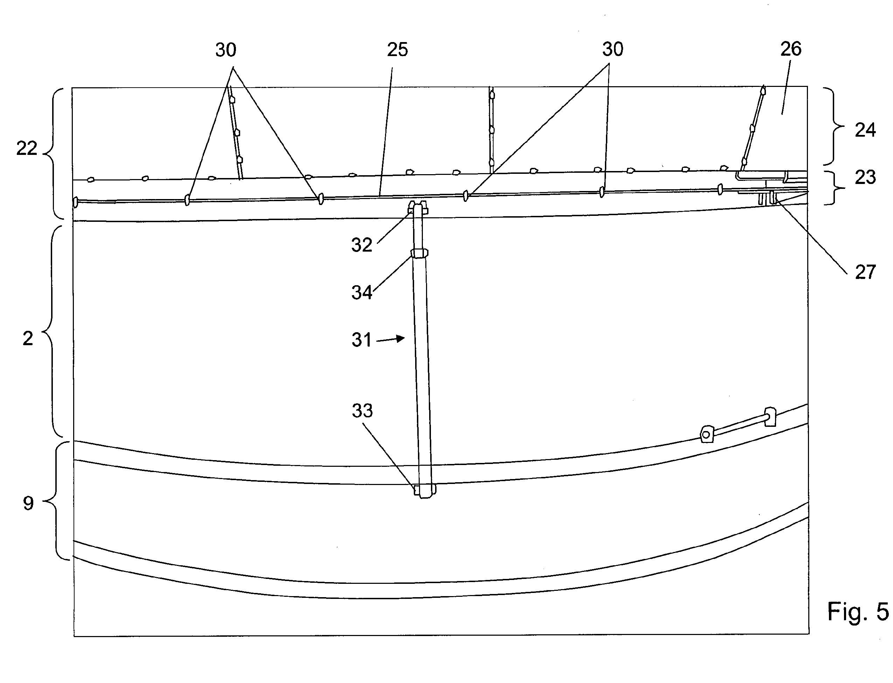

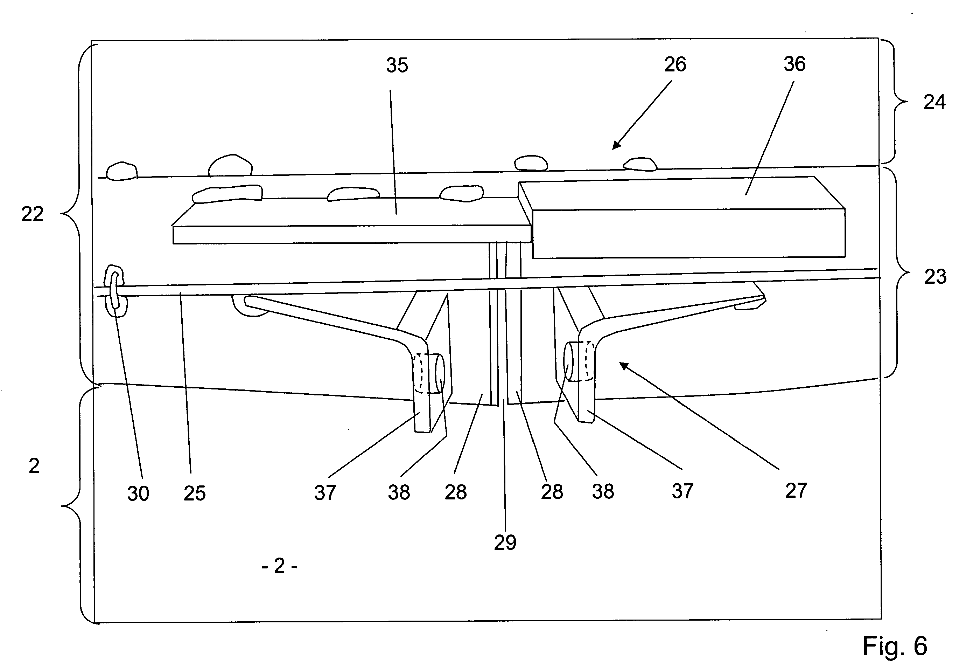

Figuren 5 bis 7 zeigen eine zweite Variante der Anbringung des Füge- und Schweißprofils in Form des geklemmten Füge- und Schweißprofils 22, welches einen unteren zylinderringförmigen Profilschenkel 23 (insbesondere bestehend wiederum aus umfänglichen Einzelsegmenten) und einen axial daran angeschweißten oberen trichterförmigen Profilschenkel 24 (insbesondere bestehend wiederum aus umfänglichen Einzelsegmenten) beinhaltet. Das Füge- und Schweißprofil 22 ist auf dem oberen Rand des äußeren Mantels des Behälterschusses 2 aufgebracht und dort reib-/kraftschlüssig klemmend festgelegt, wobei der Behälterschuss 2 mit seiner unteren Stirnseite auf dem Montagering 9 steht. Der Reib-/Kraftschluss zwischen dem geklemmten Füge- und Schweißprofil 22 und dem oberen Mantelrand des Behälterschusses 2 wird durch ein Zugseil 25 bewerkstelligt, welches umfänglich außen auf das Füge- und Schweißprofil 22 aufgelegt und anschließend durch nicht dargestellte Zugmittel in seiner wirksamen Länge verkürzt wird, wodurch sich der Umfang und Durchmesser des Füge- und Schweißprofils 22 verringert und sich die radial wirkende Klemmkraft auf den äußeren Mantel des Behälterschusses 2 erhöht. Es können natürlich auch andere Spannmittel als das Zugseil 25 verwendet werden, wie z.B. Kniehebel oder Schraubbolzen an den offenen Enden 28 des Füge- und Schweißprofils 22 bzw. dessen unteren zylinderringförmigen Profilschenkels 23, die zwischen sich einem Axialspalt 29 bilden.

Das Zugseil 25 kann zur axialen Positionierung in auf dem Außenumfang angebrachten Ösen 30 oder auf nicht dargestellten kleinen Winkelprofilen oder radialen Zapfen verlaufen.

Zur axialen Positionierung des Füge- und Schweißprofils 22 kann ein lösbarer Abstandshalter vorgesehen sein, der hier als längeneinstellbare Abstandsstange 31 ausgeführt ist und mit seinem oberen Ende 32 am Außenmantel des Füge- und Schweißprofils 22 (insbesondere am unteren zylinderringförmigen Profilschenkel 23) und mit seinem unteren Ende 33 am Montagering 9 wiederholt lösbar befestigt ist. Anstatt der Befestigung am Montagering 9, kann die Abstandsstange 31 auch an einem ortfesten Erdpunkt (z.B. Fundament) wiederholt lösbar festgelegt werden. Die Abstandsange 31 kann mechanisch über eine Schraubverbindung 34 oder über eine Stift-Ösen-Verbindung oder eine Kugel-Bohrungs-Verbindung in der Länge veränderbar sein oder aber hydraulisch oder pneumatisch teleskopierbar sein.

Zur axialen Führung des Füge- und Schweißprofils 22 während des Klemmens durch Kürzen der wirksamen Länge des Zugseils 25 ist eine Flachführung 26 am Außenumfang des unteren zylinderringförmigen Profilschenkels 23 vorgesehen, wobei die Flachführung 26 aus einer Rechteckplatte 35 besteht, welche in einem dazu passenden Rechteckheft 36 gleitend geführt ist. Damit ist ein unerwünschter axialer Versatz zwischen den beiden Enden 28 des Füge- und Schweißprofils 22 ausgeschlossen.

Zur Sicherung der Klemmverbindung, falls das Zugseil 25 reißen sollte, ist an den beiden Enden des Füge- und Schweißprofils 22 eine Klemmsicherung 27 vorgesehen, welche je ein Winkelprofil 37 mit etwa umfänglich verlaufender Durchgangsbohrung 38 vorsieht, wobei durch diese Bohrung 38 ein nicht dargestellter Sicherungsbolzen hindurchgeführt ist, der die beiden Enden 28 zueinander in ihrer Relativlage formschlüssig sichert. Dieser Sicherungsbolzen kann die Funktion der zuvor erwähnten Flachführung 26 ergänzen oder übernehmen, so dass auch die Flachführung 26 entfallen könnte.

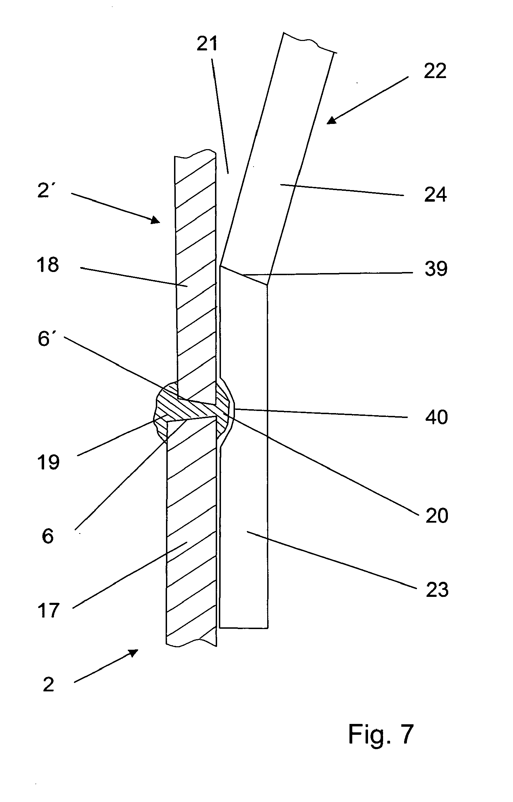

In Figur 7 ist analog zur Figur 4 ein axialer Schnitt durch den Endbereich zweier aufeinander stehender und miteinander zu verbindender Behälterschüsse 17, 18 dargestellt. Es ist zu erkennen, dass der untere zylinderringförmige Profilschenkel 23 des Füge- und Schweißprofils 22 über eine Schweißverbindung 39 mit dem oberen trichterförmigen Profilschenkel 24 des Füge- und Schweißprofils 22 verbunden ist. Weiterhin sieht man die Schweißbadsicherung 40, welche insbesondere durch spanabhebende Bearbeitung (z.B. Fräsen) auf der inneren Mantelseite des unteren zylinderringförmigen Profilschenkels 23 eingebracht ist.

Die Heft-Schweißnaht 8 ist gegenüber der Figur 4 entfallen, da ja das Füge- und Schweißprofil 22 der Figur 7 auf dem Behälterschuss 2 geklemmt wird.

Insgesamt ist die Blechdicke des insbesondere aus unvergütetem Stahl oder auch aus Aluminium bestehenden wieder verwendbaren geklemmten Füge- und Schweißprofils 22 nach den Figuren 5-7 etwas stärker ausgeführt, als das aus Edelstahl oder auch aus Aluminium bestehenden heftgeschweißten Füge- und Schweißprofils 3, das an dem Behälter 1 verbleibt, nach den Figuren 1-4.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

### Zeichnungslegende

- 1: Lagerbehälter
- 2: unterer Behälterschuss; 2' oberer Behälterschuss
- 3: heftgeschweißtes Füge- und Schweißprofil
- 4: Schusssegment
- 5: Schussprofilsegment
- 6: Stirnfläche Behälterschuss 2; 6' Stirnfläche Behälterschuss 2'
- 7: Quernaht (Behälterschuss)
- 8: Heft-Schweißnaht
- 9: Montagering
- 10: Transport-Hilfskonstruktion
- 11: Befestigungselement
- 12: Quernaht Schweißprofilsegment
- 13: -
- 14: Profilschenkel, unten
- 15: Profilschenkel, oben
- 16: Schweißbadsicherung
- 17: axial oberes Ende von 2
- 18: axial unteres Ende von 2'
- 19: Längsschweißnaht
- 20: Schweißnahtwurzel
- 21: Aufnahmeraum für 18 von 2'
- 22: geklemmtes Füge- und Schweißprofil
- 23: unterer zylinderringförmiger Profilschenkel von 22
- 24: oberer trichterförmiger Profilschenkel von 23
- 25: Zugseil
- 26: Flachführung
- 27: Klemmsicherung
- 28: Enden von 22 bzw. 23
- 29: Spalt zwischen 28
- 30: Ösen für 25
- 31: Abstandsstange
- 32: oberes Ende von 31
- 33: unteres Ende von 31
- 34: Schraubverbindung von 31
- 35: Rechteckplatte von 26
- 36: Rechteckheft von 26
- 37: Winkel von 27
- 38: Durchgangsbohrung in 37
- 39: Schweißverbindung zwischen 23 und 24
- 40: Schweißbadsicherung in 22

## Patentansprüche

1. Füge- und Schweißprofil (3, 22) zur Herstellung eines aus axial seriell hintereinander angeordneten zylinderringförmigen Behälterschüssen (2, 2') bestehenden Lagerbehälters (1), **dadurch gekennzeichnet, dass** das Füge- und Schweißprofil (3, 22) einen Zylinderring (14, 23) und einen sich daran anschließenden Konusring (15, 24) beinhaltet, wobei der Zylinderring (14, 23) jeweils auf dem Außenmantel eines von zwei benachbarten Behälterschüssen (2, 2') befestigt ist und sich derart axial zwischen den benachbarten Behälterschüssen (2, 2') erstreckt, dass eine radial nach innen weisende Ringnut (16, 40) im Zylinderring (14, 23) im Bereich von sich gegenüberliegender Stirnseiten (6, 6') der Enden (17, 18) der zwei benachbarten Behälterschüsse (2, 2'), diesen zugewandt, liegt und wobei der Konusring (15, 24) sich vom Behälterschuss (2) mit dem daran befestigten Zylinderring (14, 23) in Richtung des benachbarten Behälterschusses (2') von radial innen nach radial außen hin öffnet und der Konusring (15, 24) vollkommen auf der Seite des Behälterschusses (2') liegt, der dem Behälterschuss (2) mit dem daran befestigten Zylinderring (14, 23) gegenüberliegt.

2. Füge- und Schweißprofil nach Anspruch 1, **dadurch gekennzeichnet, dass** der Zylinderring (14) des Füge- und Schweißprofils (3) mittels Heft-Schweißnähte (8) an der äußeren Manteloberfläche des Behälterschusses (2) stoffschlüssig angebracht ist.

3. Füge- und Schweißprofil nach Anspruch 2, **dadurch gekennzeichnet, dass** das Füge- und Schweißprofil (3) einstückig aus legiertem Edelstahlblech oder aus Aluminium mit einer Blechdicke zwischen vorzugsweise etwa 1 und 5 mm gebildet ist und die Ringnut (16) radial außerhalb an der Schweißnaht (19) bzw. dessen Schweißnahtwurzel (20) zwischen den sich gegenüberliegender Stirnseiten (6, 6') der Enden (17, 18) der zwei benachbarten Behälterschüsse (2, 2') als Sicke durch Rollen eingeprägt ist.

4. Füge- und Schweißprofil nach Anspruch 1, **dadurch gekennzeichnet, dass** der Zylinderring (23) des Füge- und Schweißprofils (22) mittels Klemmvorrichtung (25) an der äußeren Manteloberfläche des Behälterschusses (2, 2') lösbar reib-/kraftschlüssig angebracht ist.

5. Füge- und Schweißprofil nach Anspruch 4, **dadurch gekennzeichnet, dass** die Klemmvorrichtung (25) ein insbesondere durch einen Kniehebel in seiner wirksamen Länge verkürzbares Seil, insbesondere Stahlseil darstellt.

6. Füge- und Schweißprofil nach Anspruch 4 oder 5, **dadurch gekennzeichnet, dass** mindestens der Zylinderring (23) des Füge- und Schweißprofils (22) umfänglich offen ist und einen Spalt (29) zwischen den beiden umfänglichen Enden (28) gebildet ist, der durch die Klemmvorrichtung (25) verkleinerbar ist.

7. Füge- und Schweißprofil nach Anspruch 6, **dadurch gekennzeichnet, dass** auch der Konusring (24) des Füge- und Schweißprofils (22) umfänglich offen ist und einen Spalt zwischen den beiden umfänglichen Enden gebildet ist, der durch die Klemmvorrichtung (25) verkleinerbar ist.

8. Füge- und Schweißprofil nach Anspruch 6 oder 7, **dadurch gekennzeichnet, dass** zwischen den beiden umfänglichen Enden (28) eine Flachführung (36) angeordnet ist, welche die beiden Enden (28) immer axial auf gleicher Höhe hält.

9. Füge- und Schweißprofil nach einem der Ansprüche 6 bis 8, **dadurch gekennzeichnet, dass** zwischen den beiden umfänglichen Enden (28) eine Reißsicherung (27) angeordnet ist, welche die beiden Enden (28) immer zueinander sichert, so dass ein maximaler Spalt (29) nicht überschritten wird.

10. Füge- und Schweißprofil nach einem der Ansprüche 4 bis 9, **dadurch gekennzeichnet, dass** das Füge- und Schweißprofil (3) aus unlegiertem Baustahlblech oder aus legiertem Edelstahlblech oder aus Aluminium, mit einer Blechdicke zwischen vorzugsweise etwa 5 und 10 mm gebildet ist und die Ringnut (40) radial außerhalb an der Schweißnaht (19) bzw. dessen Schweißnahtwurzel (20) sich gegenüberliegender Stirnseiten (6, 6') der Enden (17, 18) der zwei benachbarten Behälterschüsse (2, 2') durch spanabhebende Bearbeitung z.B. Fräsen eingearbeitet ist.

11. Füge- und Schweißprofil nach Anspruch 10, **dadurch gekennzeichnet, dass** das der Zylinderring (23) und der Konusring (24) des Füge- und Schweißprofils (22) mittels Schweißnaht (39) verbunden sind.

12. Füge- und Schweißprofil nach einem der Ansprüche 4 bis 11, **dadurch gekennzeichnet, dass** das an dem Füge- und Schweißprofil (22) insbesondere an dessen Zylinderring (23) mindestens drei über dem Umfang des Füge- und Schweißprofils (22) insbesondere gleichmäßig verteilte längeneinstellbare Abstandsstangen (31) angeordnet sind, welche dort mit ihrem einen Ende festliegen und sich mit ihrem anderen Ende am Erdboden oder einem darauf aufliegenden Montagering (9) abstützen und somit das Füge- und Schweißprofil (22) auf dem Außenmantel des Behälterschusses (2, 2') axial gesichert wird.

13. Füge- und Schweißprofil nach Anspruch 12, **dadurch gekennzeichnet, dass** die Abstandsstangen (31) durch eine Schraubverbindung, oder formschlüssige Rastverbindung, oder hydraulische und/oder pneumatische Zylinder-Kolbenkonstruktion in ihrer Länge veränderbar sind.

14. Verfahren zum Aufbau eines aus axial seriell hintereinander angeordneten zylinderringförmigen Behälterschüssen (2, 2') bestehenden Lagerbehälters (1), unter Verwendung des Füge- und Schweißprofils (3) nach einem der Ansprüche 1 bis 13, **dadurch gekennzeichnet, dass**
a) zunächst ein unterster Behälterschuss (2) auf dem Erdboden oder einem Montagering (9) aufgelegt wird,
b) danach auf dem Außenmantel des Endes (17) des untersten Behälterschusses (2) das Füge- und Schweißprofil (3) über eine Vielzahl von Heft-Schweißnaht-Punkten (8) angebracht wird,
c) danach ein oberer Behälterschuss (2'), ggfs. bestehend aus mehreren miteinander verschweißten Behälterschüssen, von oben auf den untersten Behälterschuss (2) aufgesetzt wird, wobei der obere Behälterschuss (2') durch das Füge- und Schweißprofil (3) zum untersten Behälterschuss (2) lagezentriert bzw. koaxial ausgerichtet wird,
d) danach die beiden Behälterschüsse (2, 2') mittels Schweißnaht (19) vom Innern des Lagerbehälters (1) her miteinander verschweißt werden,
e) schließlich die beiden miteinander verschweißten Behälterschüsse (2, 2') über das Höhenniveau eines weiteren Behälterschusses hinaus hochgehoben werden,
f) die Schritte a) bis e) solange wiederholt werden, bis die geplante Höhe des Lagerbehälters (1) erreicht ist.

15. Verfahren zum Aufbau eines aus axial seriell hintereinander angeordneten zylinderringförmigen Behälterschüssen (2, 2') bestehenden Lagerbehälters (1), unter Verwendung des Füge- und Schweißprofils (22) nach einem der Ansprüche 1 bis 13, **dadurch gekennzeichnet, dass**
a) zunächst ein unterster Behälterschuss (2) auf dem Erdboden oder einem Montagering (9) aufgelegt wird,
b) danach auf dem Außenmantel des Endes (17) des untersten Behälterschusses (2) das Füge- und Schweißprofil (22) über eine Klemmverbindung (25) ggfs. mit optionaler axialer Abstandsvorrichtung (31) angebracht wird,
c) danach ein oberer Behälterschuss (2'), ggfs. bestehend aus mehreren miteinander verschweißten Behälterschüssen, von oben auf den untersten Behälterschuss (2) aufgesetzt wird, wobei der obere Behälterschuss (2') durch das Füge- und Schweißprofil (22) zum untersten Behälterschuss (2) lagezentriert bzw. koaxial ausgerichtet wird,
d) danach die beiden Behälterschüsse (2, 2') mittels Schweißnaht (19) vom Innern des Lagerbehälters (1) her miteinander verschweißt werden,
e) danach das Füge- und Schweißprofil (22) vom untersten Behälterschuss (2) abgenommen wird,
f) danach die beiden miteinander verschweißten Behälterschüsse (2, 2') über das Höhenniveau eines weiteren Behälterschusses hinaus hochgehoben werden,
g) die Schritte a) bis f) solange wiederholt werden, bis die geplante Höhe des Lagerbehälters (1) erreicht ist.

16. Verfahren nach Anspruch 14 oder 15, **dadurch gekennzeichnet, dass** die einzelnen Behälterschüsse (2, 2') mittels eines Schweißroboters verschweißt werden.

## Geänderte Patentansprüche

### Geänderte Patentansprüche gemäss Regel 137(2) EPÜ.

**1.** Füge- und Schweißprofil (3, 22) zur Herstellung eines aus axial seriell hintereinander angeordneten zylinderringförmigen Behälterschüssen (2, 2') bestehenden Lagerbehälters (1), wobei das Füge- und Schweißprofil (3, 22) einen Zylinderring (14, 23) und einen sich daran anschließenden Konusring (15, 24) beinhaltet, wobei eine radial nach innen weisende Ringnut (16, 40) im Zylinderring (14, 23) liegt, **dadurch gekennzeichnet, dass** das Füge- und Schweißprofil (3) einstückig gebildet ist und die Ringnut (16) als Sicke eingeprägt ist.

**2.** Füge- und Schweißprofil nach Anspruch 1, **dadurch gekennzeichnet, dass** das Füge- und Schweißprofil (3) aus legiertem Edelstahlblech oder aus Aluminium mit einer Blechdicke zwischen vorzugsweise etwa 1 und 5 mm gebildet ist.

**3.** Füge- und Schweißprofil (3, 22) zur Herstellung eines aus axial seriell hintereinander angeordneten zylinderringförmigen Behälterschüssen (2, 2') bestehenden Lagerbehälters (1), wobei das Füge- und Schweißprofil (3, 22) einen Zylinderring (14, 23) und einen sich daran anschließenden Konusring (15, 24) beinhaltet, wobei eine radial nach innen weisende Ringnut (16, 40) im Zylinderring (14, 23) liegt, wobei der Zylinderring (23) und der Konusring (24) des Füge- und Schweißprofils (22) mittels Schweißnaht (39) verbunden sind, **dadurch gekennzeichnet, dass** die Ringnut (40) durch spanabhebende Bearbeitung z.B. Fräsen eingearbeitet ist und dass mindestens der Zylinderring (23) des Füge- und Schweißprofils (22) umfänglich offen ist und ein Spalt (29) zwischen den beiden umfänglichen Enden (28) gebildet ist, der durch eine Klemmvorrichtung (25) verkleinerbar ist.

**4.** Füge- und Schweißprofil nach Anspruch 3, **dadurch gekennzeichnet, dass** auch der Konusring (24) des Füge- und Schweißprofils (22) umfänglich offen ist und einen Spalt zwischen den beiden umfänglichen Enden gebildet ist, der durch die Klemmvorrichtung (25) verkleinerbar ist.

**5.** Füge- und Schweißprofil nach Anspruch 3 oder 4, **dadurch gekennzeichnet, dass** zwischen den beiden umfänglichen Enden (28) eine Flachführung (36) angeordnet ist, welche die beiden Enden (28) immer axial auf gleicher Höhe hält.

**6.** Füge- und Schweißprofil nach einem der Ansprüche 3 bis 5, **dadurch gekennzeichnet, dass** zwischen den beiden umfänglichen Enden (28) eine Reißsicherung (27) angeordnet ist, welche die beiden Enden (28) immer zueinander sichert, so dass ein maximaler Spalt (29) nicht überschritten wird.

**7.** Füge- und Schweißprofil nach einem der Ansprüche 3 bis 6, **dadurch gekennzeichnet, dass** das Füge- und Schweißprofil (3) aus unlegiertem Baustahlblech oder aus legiertem Edelstahlblech oder aus Aluminium, mit einer Blechdicke zwischen vorzugsweise etwa 5 und 10 mm gebildet ist..

**8.** Füge- und Schweißprofil nach einem der Ansprüche 3 bis 7, **dadurch gekennzeichnet, dass** das an dem Füge- und Schweißprofil (22) insbesondere an dessen Zylinderring (23) mindestens drei über dem Umfang des Füge- und Schweißprofils (22) insbesondere gleichmäßig verteilte längeneinstellbare Abstandsstangen (31) angeordnet sind, welche dort mit ihrem einen Ende festlegen und sich mit ihrem anderen Ende am Erdboden oder einem darauf aufliegenden Montagering (9) abstützen können.

**9.** Füge- und Schweißprofil nach Anspruch 8, **dadurch gekennzeichnet, dass** die Abstandsstangen (31) durch eine Schraubverbindung, oder formschlüssige Rastverbindung, oder hydraulische und/oder pneumatische Zylinder-Kolbenkonstruktion in ihrer Länge veränderbar sind.

**10.** Verfahren zum Aufbau eines aus axial seriell hintereinander angeordneten zylinderringförmigen Behälterschüssen (2, 2') bestehenden Lagerbehälters (1), unter Verwendung des Füge- und Schweißprofils (3) nach einem der Ansprüche 1 bis 9, wobei
a) zunächst ein unterster Behälterschuss (2) auf dem Erdboden oder einem Montagering (9) aufgelegt wird,
b) danach auf dem Außenmantel des Endes (17) des untersten Behälterschusses (2) das Füge- und Schweißprofil (3) über eine Vielzahl von Heft-Schweißnaht-Punkten (8) angebracht wird,
c) danach ein oberer Behälterschuss (2'), ggfs. bestehend aus mehreren miteinander verschweißten Behälterschüssen, von oben auf den untersten Behälterschuss (2) aufgesetzt wird, wobei der obere Behälterschuss (2') durch das Füge- und Schweißprofil (3) zum untersten Behälterschuss (2) lagezentriert bzw. koaxial ausgerichtet wird,
d) danach die beiden Behälterschüsse (2, 2') mittels Schweißnaht (19) vom Innern des Lagerbehälters (1) her miteinander verschweißt werden,
e) schließlich die beiden miteinander verschweißten Behälterschüsse (2, 2') über das Höhenniveau eines weiteren Behälterschusses hinaus hochgehoben werden,
f) die Schritte a) bis e) solange wiederholt werden, bis die geplante Höhe des Lagerbehälters (1) erreicht ist.

**11.** Verfahren zum Aufbau eines aus axial seriell hintereinander angeordnetes zylinderringförmigen Behälterschüssen (2, 2') bestehenden Lagerbehälters (1), unter Verwendung des Füge- und Schweißprofils (22) nach einem der Ansprüche 1 bis 9, wobei
a) zunächst ein unterster Behälterschuss (2) auf dem Erdboden oder einem Montagering (9) aufgelegt wird,
b) danach auf dem Außenmantel des Endes (17) des untersten Behälterschusses (2) das Füge- und Schweißprofil (22) über eine Klemmverbindung (25) ggfs. mit optionaler axialer Abstandsvorrichtung (31) angebracht wird,
c) danach ein oberer Behälterschuss (2'), ggfs. bestehend aus mehreren miteinander verschweißten Behälterschüssen, von oben auf den untersten Behälterschuss (2) aufgesetzt wird, wobei der obere Behälterschuss (2') durch das Füge- und Schweißprofil (22) zum untersten Behälterschuss (2) lagezentriert bzw. koaxial ausgerichtet wird,
d) danach die beiden Behälterschüsse (2, 2') mittels Schweißnaht (19) vom Innern des Lagerbehälters (1) her miteinander verschweißt werden,
e) danach das Füge- und Schweißprofil (22) vom untersten Behälterschuss (2) abgenommen wird,
f) danach die beiden miteinander verschweißten Behälterschüsse (2, 2') über das Höhenniveau eines weiteren Behälterschusses hinaus hochgehoben werden,
g) die Schritte a) bis f) solange wiederholt werden, bis die geplante Höhe des Lagerbehälters (1) erreicht ist.
